# EUROPÄISCHE PATENTSCHRIFT

(11) **EP 3 189 706 B1**
(45) Veröffentlichungstag und Bekanntmachung des Hinweises auf die Patenterteilung: **26.09.2018**
(21) Anmeldenummer: 15754168.1
(22) Anmeldetag: 19.08.2015
(51) Int. Cl.: H05B 3/12, H05B 3/86, B23K 101/36, B23K 26/351

(54) **SCHEIBE MIT ELEKTRISCHEM HEIZBEREICH**
PANE WITH ELECTRIC HEATING AREA
VITRE AVEC ZONE DE CHAUFFAGE ÉLECTRIQUE

(30) Priorität: 04.09.2014 EP 14183518
(43) Veröffentlichungstag der Anmeldung: 12.07.2017
(73) Patentinhaber: Saint-Gobain Glass France, 92400 Courbevoie (FR)
(72) Erfinder: SCHALL, Günther, 52372 Kreuzau (DE); SCHULZ, Valentin, 52382 Niederzier (DE)
(74) Vertreter: Gebauer, Dieter Edmund
(86) Internationale Anmeldenummer: PCT/EP2015/069001
(87) Internationale Veröffentlichungsnummer: WO 2016/034413

(56) Entgegenhaltungen:
- WO-A1-2014/095153
- DE-A1- 3 644 297
- US-A1- 2004 065 651
- US-A1- 2013 082 043

## Beschreibung

Die Erfindung betrifft eine Scheibe mit elektrischem Heizbereich, ein Verfahren zu deren Herstellung und deren Verwendung.

Das Sichtfeld einer Fahrzeugscheibe, insbesondere einer Windschutzscheibe muss frei von Eis und Beschlag gehalten werden. Bei Kraftfahrzeugen mit Verbrennungsmotor kann beispielsweise ein mittels Motorwärme erwärmter Luftstrom auf die Scheiben gelenkt werden.

Alternativ kann die Scheibe eine elektrische Heizfunktion aufweisen. US 3,409,759 A und EP 0 788 294 A1 offenbaren Verbundscheiben, bei denen dünne Drähte in die Verbundscheibe einlaminiert sind. Durch eine externe Spannungsquelle kann ein elektrischer Strom durch die Drähte geleitet werden, der die Drähte und damit die Scheibe erwärmt.

Des Weiteren sind Verbundscheiben bekannt, die auf einer innenseitigen Oberfläche einer der Einzelscheiben eine transparente, elektrisch leitfähige Beschichtung aufweisen. Durch eine externe Spannungsquelle kann ein elektrischer Strom durch die elektrisch leitfähige Beschichtung geleitet werden, der die Beschichtung und damit die Scheibe erwärmt. WO2012/052315 A1 offenbart beispielsweise eine solche beheizbare, elektrisch leitfähige Beschichtung auf Metallbasis.

Weiterer Stand der Technik kann WO 2014/095153, US 2004/0065651 A1, DE 3644297 A1 und EP 2761976 B1 entnommen werden.

Die elektrische Kontaktierung der elektrisch leitfähigen Beschichtung erfolgt typischerweise über Sammelleiter, wie aus US 2007/0020465 A1 bekannt ist. Die Sammelleiter bestehen beispielsweise aus einer aufgedruckten und eingebrannten Silberpaste. Die Sammelleiter verlaufen typischerweise entlang der oberen und unteren Kante der Scheibe. Die Sammelleiter sammeln den Strom, der durch die elektrisch leitfähige Beschichtung fließt und leiten ihn zu externen Zuleitungen, die mit einer Spannungsquelle verbunden sind.

Die Aufgabe der vorliegenden Erfindung besteht darin, eine verbesserte Scheibe mit elektrischem Heizbereich mit gleichmäßigerer Heizleistungsverteilung bereitzustellen, die einfach und kostengünstig herzustellen ist.

Die Aufgabe der vorliegenden Erfindung wird erfindungsgemäß durch eine Scheibe mit elektrischem Heizbereich gemäß Anspruch 1 gelöst. Bevorzugte Ausführungen gehen aus den Unteransprüchen hervor.

Die erfindungsgemäße Scheibe mit elektrischem Heizbereich umfasst zumindest die folgenden Merkmale:
- eine im Wesentlichen trapezförmige erste Scheibe mit einer Oberfläche III, einer ersten Grundseite mit Länge l₁ und einer zweiten Grundseite mit Länge l₂, wobei das Verhältnis v der Längen der Grundseiten
   v = l₁ : l₂ von 0,70 : 1 bis 0,98 : 1
   beträgt,
- mindestens eine elektrisch leitfähige Beschichtung, die zumindest auf einem Teil der Oberfläche III aufgebracht ist,
- mindestens einen im Wesentlichen trapezförmigen elektrischen Heizbereich, der durch mindestens eine Trennlinie von der elektrisch leitfähigen Beschichtung elektrisch unterteilt ist und eine erste Grundseite des elektrischen Heizbereichs unmittelbar benachbart zur ersten Grundseite der ersten Scheibe und eine zweite Grundseite des elektrischen Heizbereichs unmittelbar benachbart zu der zweiten Grundseite der ersten Scheibe angeordnet ist,
- mindestens zwei zum Anschluss an eine Spannungsquelle vorgesehene Sammelleiter, die mit der elektrisch leitfähigen Beschichtung im elektrischen Heizbereich so verbunden sind, dass zwischen den Sammelleitern ein Strompfad für einen Heizstrom geformt ist,
wobei das Verhältnis der Länge b₁ der ersten Grundseite des Heizbereichs zur Länge b₂ der zweiten Grundseite des Heizbereichs, bei gegebenem Verhältnis v,
b₁ : b₂ von v : 0,99 bis v : 0,50
beträgt.

Unter einer im Wesentlichen trapezförmigen Scheibe wird hier eine Scheibe mit in etwa trapezförmigem Umriss beschrieben. Wie üblich, werden im Folgenden die beiden parallelen oder im Wesentlichen parallelen Seiten des Trapezes Grundseiten genannt und die beiden angrenzenden (im Allgemeinen nicht parallelen) Seiten als Schenkel bezeichnet.

Der im Wesentlichen trapezförmige Umriss der Scheibe kann eine oder mehreren gekrümmte oder abgeknickte Seitenkanten aufweisen. So sind bei vielen derartigen Scheiben jedenfalls die Grundseiten des Trapezes, gekrümmt. Die Schenkel sind hingegen oftmals im Wesentlichen geradlinig. Des Weiteren können die Ecken der Scheibe abgerundet sein. Entsprechendes gilt für den im Wesentlichen trapezförmigen Heizbereich. Die Sammelleiter können geradlinig verlaufen oder bevorzugt entlang der Grundseiten der Scheibe verlaufen und deren Krümmung nachbilden. Zwischen Sammelleiter und Grundseite der Scheibe kann auch ein Abstand vorliegen, indem beispielsweise ein weiterer elektrischer Heizbereich wie eine Wischerfeldheizung angeordnet sein können.

Bei Scheiben nach dem Stand der Technik ohne Trennlinien entspricht der elektrische Heizbereich dem Bereich der elektrisch leitfähigen Beschichtung. Derartige Scheiben haben in der Regel eine sehr inhomogene Heizleistungsverteilung. Sie weisen bei Beheizung besonders im Bereich der längeren Grundseite eine niedrigere Heizleistung und damit eine niedrigere Temperatur sowie ein schlechteres Abtau- und Antibeschlagverhalten auf.

Die Erfindung beruht auf der Erkenntnis, dass durch Trennlinien ein erfindungsgemäßer elektrischer Heizbereich ausgebildet wird und dadurch eine Optimierung des Strompfades erzielt werden kann. Dies führt zu einer homogeneren Heizleistungsverteilung und Temperaturverteilung. Gleichzeitig bleibt der Strukturierungsaufwand zur Einbringung der Trennlinien zeitlich und finanziell wirtschaftlich akzeptabel.

Die Trennlinien müssen besonders dünn ausgebildet sein, um die Durchsicht der Scheibe möglichst wenig zu beeinträchtigen. In einer vorteilhaften Ausgestaltung der erfindungsgemäßen Scheibe beträgt die Breite d der Trennlinien von 30 µm bis 200 µm und bevorzugt von 70 µm bis 140 µm. Dies hat den besonderen Vorteil, dass Trennlinien mit einer derart geringen Breite die Durchsicht durch die Scheibe nicht oder nur sehr geringfügig beeinträchtigen.

Erfindungsgemäße Scheiben weisen eine erste Grundseite mit Länge l₁ und eine zweite Grundseite mit Länge l₂ auf, wobei das Verhältnis v der Längen der Grundseiten v = l₁ : l₂ von 0,70 : 1 bis 0,98 : 1 beträgt.

Die Länge der jeweiligen Grundseite der ersten Scheibe berechnet sich dabei entlang des Wegs der Seitenkante und damit entlang einer etwaigen Krümmung der Scheibe. Die mindestens eine elektrisch leitfähige Beschichtung ist zumindest auf einem Teil der Oberfläche III aufgebracht und insbesondere auf der gesamten Oberfläche III der Scheibe, abzüglich einer Randentschichtung und eventuell abzüglich von entschichteten Bereichen, die beispielsweise als Kommunikationsfenster dienen.

Der im Wesentlichen trapezförmige elektrische Heizbereich wird durch mindestens eine Trennlinie von der elektrisch leitfähigen Beschichtung elektrisch unterteilt. Im Falle einer Unterteilung durch genau eine Trennlinie beschreibt die Trennlinie bevorzugt den Umriss eines Trapezes. Die Sammelleiter sind dann vollständig oder teilweise innerhalb der von der Trennlinie umschlossenen Fläche angeordnet. Im Falle einer Unterteilung durch zwei oder mehr Trennlinien verlaufen die Trennlinien bevorzugt zwischen den Grundseiten des elektrischen Heizbereichs und zwischen den Sammelleitern.

Eine erste Grundseite des elektrischen Heizbereichs ist unmittelbar benachbart zur ersten Grundseite der ersten Scheibe und eine zweite Grundseite des elektrischen Heizbereichs unmittelbar benachbart zu der zweiten Grundseite der ersten Scheibe angeordnet. Unmittelbar benachbart bedeutet hier, dass die zweite Grundseite des elektrischen Heizbereichs zwischen der ersten Grundseite des elektrischen Heizbereichs und der zweiten Grundseite der ersten Scheibe angeordnet ist und nicht zwischen der ersten Grundseite des elektrischen Heizbereichs und der ersten Grundseite der Scheibe angeordnet ist.

In einer vorteilhaften Ausgestaltung einer erfindungsgemäßen Scheibe ist die erste Grundseite des Heizbereichs im Wesentlichen parallel zur ersten Grundseite der ersten Scheibe angeordnet.

In einer weiteren vorteilhaften Ausgestaltung einer erfindungsgemäßen Scheibe entspricht die Länge der kürzeren der beiden Grundseiten der ersten Scheibe der Länge der unmittelbar benachbarten Grundseite des Heizbereichs zuzüglich der Breite r einer Randentschichtung, das bedeutet: l_{1/2} ist ungefähr gleich b_{1/2} + 2 r. Dies hat den besonderen Vorteil, dass die Scheibe möglichst großflächig elektrisch beheizt werden kann.

Mindestens zwei und insbesondere genau zwei zum Anschluss an eine Spannungsquelle vorgesehene Sammelleiter sind so mit der elektrisch leitfähigen Beschichtung im elektrischen Heizbereich verbunden, dass bei Anliegen einer Spannung zwischen den Sammelleitern ein Strompfad für einen Heizstrom geformt ist und den Heizbereich samt zugehörigen Teil der Scheibe erwärmt.

Die Sammelleiter weisen mindestens die Länge der Grundseite des Heizbereichs auf, an der sie angeordnet sind. Bei gegebenen Verhältnis v der Längen der Grundseiten der ersten Scheibe beträgt das erfindungsgemäße Verhältnis der Länge b₁ der ersten Grundseite des Heizbereichs zur Länge b₂ der zweiten Grundseite des Heizbereichs
b₁ : b₂ von v : 0,99 bis v : 0,50.

Die Länge der jeweiligen Grundseite des Heizbereichs berechnet sich dabei entlang der Erstreckungsrichtung (also der längeren Ausdehnung) des jeweiligen Sammelleiters und damit entlang einer etwaigen Krümmung der Grundseite.

In einer vorteilhaften Ausgestaltung einer erfindungsgemäßen Scheibe weist die erste Scheibe und/oder der elektrische Heizbereich die Form eines symmetrischen Trapezes auf. Dadurch lässt sich eine besonders vorteilhafte und homogene Heizleistungsverteilung erzielen.

In einer vorteilhaften Ausgestaltung einer erfindungsgemäßen Scheibe ist das Verhältnis der Länge b₁ der ersten Grundseite des Heizbereichs zur Länge b₂ der zweiten Grundseite des Heizbereichs ungleich 1, das heißt der elektrische Heizbereich ist nicht rechteckig. Rechteckige Heizbereiche zeigen zwar homogene Heizleistungsverteilungen, aber sind optisch auffälliger als trapezförmige Heizbereiche, die sich einfacher in der dreidimensionalen Krümmung der Scheibe optisch integrieren lassen.

In einer weiteren vorteilhaften Ausgestaltung einer erfindungsgemäßen Scheibe beträgt das Verhältnis der Länge b₁ der ersten Grundseite des Heizbereichs zur Länge b₂ der zweiten Grundseite des Heizbereichs
b₁ : b₂ von v : 0,99 bis 0,99.

Dies ist besonders vorteilhaft um, die Seitenbereiche der Scheibe im Bereich der längeren der beiden Grundseiten möglichst weitreichend zu beheizen und dennoch eine erfindungsgemäße homogenere Heizleistungsverteilung zu erzielen.

In einer weiteren vorteilhaften Ausgestaltung einer erfindungsgemäßen Scheibe beträgt das Verhältnis der Länge b₁ der ersten Grundseite des Heizbereichs zur Länge b₂ der zweiten Grundseite des Heizbereichs
b₁ : b₂ von 1,01 bis v : 0,50.

Dies ist besonders vorteilhaft, um eine Verbesserung der Homogenität der Heizleistungsverteilung zu erreichen, wenn innerhalb des elektrischen Heizbereichs mindestens ein entschichteter oder beschichtungsfreier Bereich, beispielsweise zur Ausbildung eines Kommunikationsfensters angeordnet ist, wobei der entschichtete oder beschichtungsfreie Bereiche bevorzugt in der Scheibenmitte angeordnet ist.

Dies ist weiterhin besonders vorteilhaft, wenn der Abstand h₁ der Sammelleiter in der Mitte des elektrischen Heizbereichs größer ist als der Abstand h₂ der Sammelleiter an den äußeren Rändern des elektrischen Heizbereichs. Es versteht sich, dass die entschichteten oder beschichtungsfreien Bereiche auch mit einem größeren Abstand h₁ im Vergleich mit h₂ kombiniert sein können.

Die Breite des ersten und zweiten Sammelleiters beträgt bevorzugt von 2 mm bis 30 mm, besonders bevorzugt von 4 mm bis 20 mm und insbesondere von 10 mm bis 20 mm. Dünnere Sammelleiter führen zu einem zu hohen elektrischen Widerstand und damit zu einer zu hohen Erwärmung des Sammelleiters im Betrieb. Des Weiteren sind dünnere Sammelleiter nur schwer durch Drucktechniken wie Siebdruck herzustellen. Dickere Sammelleiter erfordern einen unerwünscht hohen Materialeinsatz. Des Weiteren führen sie zu einer zu großen und unästhetischen Einschränkung des Durchsichtbereichs der Scheibe. Die Länge des Sammelleiters richtet sich nach der Ausdehnung des elektrischen Heizbereichs. Bei einem Sammelleiter, der typischerweise in Form eines Streifens ausgebildet ist, wird die längere seiner Dimensionen als Länge und die weniger lange seiner Dimensionen als Breite bezeichnet. Sollten weitere Sammelleiter vorhanden sein, können diese auch dünner ausgestaltet sein, bevorzugt von 0,6 mm bis 5 mm.

In einer vorteilhaften Ausgestaltung ist der erfindungsgemäße Sammelleiter als aufgedruckte und eingebrannte leitfähige Struktur ausgebildet. Der aufgedruckte Sammelleiter enthält bevorzugt zumindest ein Metall, eine Metalllegierung, eine Metallverbindung und/oder Kohlenstoff, besonders bevorzugt ein Edelmetall und insbesondere Silber. Die Druckpaste enthält bevorzugt metallische Partikel Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und / oder anorganischen Matrix wie Pasten oder Tinten befinden, bevorzugt als Druckpaste mit Glasfritten.

Die Schichtdicke des aufgedruckten Sammelleiters beträgt bevorzugt von 5 µm bis 40 µm, besonders bevorzugt von 8 µm bis 20 µm und ganz besonders bevorzugt von 8 µm bis 12 µm. Aufgedruckte Sammelleiter mit diesen Dicken sind technisch einfach zu realisieren und weisen eine vorteilhafte Stromtragfähigkeit auf.

Der spezifische Widerstand ρₐ der Sammelleiter beträgt bevorzugt von 0.8 µOhm•cm bis 7.0 µOhm•cm und besonders bevorzugt von 1.0 µOhm•cm bis 2.5 µOhm•cm. Sammelleiter mit spezifischen Widerständen in diesem Bereich sind technisch einfach zu realisieren und weisen eine vorteilhafte Stromtragfähigkeit auf.

Alternativ kann der Sammelleiter aber auch als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Die erfindungsgemäße Scheibe umfasst eine erste Scheibe, auf der eine elektrische leitfähige Beschichtung angeordnet ist. Je nach Material der elektrisch leitfähigen Beschichtung kann es vorteilhaft sein, die Beschichtung mit einer Schutzschicht, beispielsweise einem Lack, einer Polymerfolie und/oder einer zweiten Scheibe zu schützen.

In einer vorteilhaften Ausgestaltung der erfindungsgemäßen Scheibe ist die Oberfläche der ersten Scheibe, auf der die elektrische leitfähige Beschichtung angeordnet ist, über eine thermoplastische Zwischenschicht mit einer zweiten Scheibe flächig verbunden ist. Alternativ kann die elektrisch leitfähige Beschichtung auf der ersten Scheibe angeordnet werden, indem sie auf eine Trägerfolie, beispielsweise eine Polyethylenterephthalat(PET)-Folie aufgebracht wird und diese über eine Zwischenschicht, beispielsweise eine Polyvinylbutyral-(PVB)-Folie, mit der ersten Scheibe verbunden ist.

Als erste und gegebenenfalls zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm² bis zu 20 m² auf. Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere Scheiben werden durch mindesten eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und / oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und / oder Ethylen-Tetrafluorethylen, oder Copolymere oder Gemische davon enthalten. Die thermoplastische Zwischenschicht kann durch eine oder auch durch mehrere übereinander angeordnete thermoplastische Folien ausgebildet werden, wobei die Dicke ein thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer Zwischenschicht und einer zweiten Scheibe kann die elektrisch leitfähige Beschichtung direkt auf der erste Scheibe aufgebracht sein oder auf eine Trägerfolie oder auf die Zwischenschicht selbst aufgebracht sein. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die elektrisch leitfähige Beschichtung ist auf der innenseitigen Oberfläche der ersten Scheibe aufgebracht. Natürlich kann auch auf der innenseitigen Oberfläche der zweiten Scheibe eine weitere elektrisch leitfähige Beschichtung aufgebracht sein. Auch die außenseitigen Oberflächen der Scheiben können Beschichtungen aufweisen. Die Begriffe "erste Scheibe" und "zweiten Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Erfindungsgemäße elektrisch leitfähige Beschichtungen sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der elektrisch leitfähigen Beschichtung zumindest eine dielektrische Schicht angeordnet. Bevorzugt ist unterhalb der ersten und / oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schicht können aber auch mehrere Einzelschichten umfassen, beispielsweise Einzelschichten eines einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete elektrisch leitfähigen Beschichtungen enthalten bevorzugt Indium-Zinnoxid (ITO), fluordotiertes Zinnoxid (SnO₂:F) oder aluminiumdotiertes Zinkoxid (ZnO:Al).

Die elektrisch leitfähige Beschichtung kann prinzipiell jede Beschichtung sein, die elektrisch kontaktiert werden soll. Soll die erfindungsgemäße Scheibe die Durchsicht ermöglichen, wie es beispielsweise bei Scheiben im Fensterbereich der Fall ist, so ist die elektrisch leitfähige Beschichtung bevorzugt transparent. Die erfindungsgemäße elektrisch leitfähige Beschichtung ist bevorzugt für elektromagnetische Strahlung transparent, besonders bevorzugt für elektromagnetische Strahlung einer Wellenlänge von 300 bis 1.300 nm und insbesondere für sichtbares Licht.

In einer vorteilhaften Ausgestaltung ist die elektrisch leitfähige Beschichtung eine Schicht oder ein Schichtaufbau mehrere Einzelschichten mit einer Gesamtdicke von kleiner oder gleich 2 µm, besonders bevorzugt kleiner oder gleich 1 µm.

Eine vorteilhafte erfindungsgemäße elektrisch leitfähige Beschichtung weist einen Flächenwiderstand von 0,4 Ohm/Quadrat bis 10 Ohm/Quadrat auf. In einer besonders bevorzugten Ausgestaltung weist die erfindungsgemäße elektrisch leitfähige Beschichtung einen Flächenwiderstand von 0,5 Ohm/Quadrat bis 1 Ohm/Quadrat auf. Beschichtungen mit derartigen Flächenwiderständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

Die elektrisch leitfähige Beschichtung kann sich über die gesamte Oberfläche der ersten Scheibe erstrecken. Die elektrische Heizschicht kann sich alternativ aber auch nur über einen Teil der Oberfläche der ersten Scheibe erstrecken. Die elektrische Heizschicht erstreckt sich bevorzugt über mindestens 50%, besonders bevorzugt über mindestens 70% und ganz besonders bevorzugt über mindestens 90% der innenseitigen Oberfläche der ersten Scheibe.

Die elektrische leitfähige Beschichtung kann im elektrischen Heizbereich und/oder außerhalb des elektrischen Heizbereichs einen oder mehrere unbeschichtete, entschichtete oder beschichtungsfreie Bereiche aufweisen. Diese Bereiche können eine besonders hohe Transmission für elektromagnetische Strahlung, beispielsweise Infrarot-Strahlung, oder Radarwellen aufweisen und sind beispielsweise als Datenübertragungsfenster oder Kommunikationsfenster bekannt.

In einer vorteilhaften Ausgestaltung einer erfindungsgemäßen Scheibe als Verbundscheibe weist die innenseitige Oberfläche der ersten Scheibe einen umlaufenden Randbereich mit einer Breite r von 2 mm bis 50 mm, bevorzugt von 5 mm bis 20 mm auf, der nicht mit der elektrisch leitfähigen Beschichtung versehen ist. Die elektrisch leitfähige Beschichtung weist dann keinen Kontakt zur Atmosphäre auf und ist im Inneren der Scheibe durch die thermoplastische Zwischenschicht vorteilhaft vor Beschädigungen und Korrosion geschützt.

Die Sammelleiter werden durch eine oder mehrere Zuleitungen elektrisch kontaktiert. Die Zuleitung ist bevorzugt als flexibler Folienleiter (Flachleiter, Flachbandleiter) ausgebildet. Darunter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Scheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

In einer vorteilhaften Ausgestaltung der Erfindung wird die elektrische Zuleitung mit einem Kontaktband verbunden, beispielsweise mittels einer Lotmasse oder eines elektrisch leitfähigen Klebstoffs. Das Kontaktband ist dann mit dem Sammelleiter verbunden. Das Kontaktband ist im Sinne der Erfindung eine Verlängerung der Zuleitung, so dass die Verbindungsfläche zwischen Kontaktband und Sammelleiter die erfindungsgemäße Kontaktfläche zu verstehen ist, ab der der Abstand a in Erstreckungsrichtung des Sammelleiters verläuft.

Das Kontaktband erhöht vorteilhaft die Stromtragfähigkeit des Sammelleiters. Außerdem kann durch das Kontaktband eine unerwünschte Erhitzung der Kontaktstelle zwischen Sammelleiter und Zuleitung verringert werden. Zudem vereinfacht das Kontaktband die elektrische Kontaktierung des Sammelleiters durch die elektrische Zuleitung, weil die Zuleitung nicht mit dem bereits aufgebrachten Sammelleiter verbunden, beispielsweise verlötet werden muss.

Das Kontaktband enthält bevorzugt zumindest ein Metall, besonders bevorzugt Kupfer, verzinntes Kupfer, Silber, Gold, Aluminium, Zink, Wolfram und / oder Zinn. Das ist besonders vorteilhaft im Hinblick auf die elektrische Leitfähigkeit des Kontaktbandes. Das Kontaktband kann auch Legierungen enthalten, welche bevorzugt eines oder mehrere der genannten Elemente und gegebenenfalls weitere Elemente enthält, beispielsweise Messing oder Bronze.

Das Kontaktband ist bevorzugt als Streifen einer dünnen, elektrisch leitfähigen Folie ausgebildet. Die Dicke des Kontaktbandes beträgt bevorzugt von 10 µm bis 500 µm, besonders bevorzugt von 15 µm bis 200 µm, ganz besonders bevorzugt von 50 µm bis 100 µm. Folien mit diesen Dicken sind technisch einfach herzustellen und leicht verfügbar und weisen zudem einen vorteilhaft geringen elektrischen Widerstand auf.

Die Länge des Kontaktbandes beträgt bevorzugt von 10 mm bis 400 mm, besonders bevorzugt von 10 mm bis 100 mm und insbesondere 20 mm bis 60 mm. Das ist besonders vorteilhaft im Hinblick auf eine gute Handhabbarkeit des Kontaktbandes sowie auf eine zur elektrischen Kontaktierung ausreichend große Kontaktfläche zwischen Sammelleiter und Kontaktband.

Die Breite des Kontaktbandes beträgt bevorzugt von 2 mm bis 40 mm, besonders bevorzugt von 5 mm bis 30 mm. Das ist besonders vorteilhaft im Hinblick auf die Kontaktfläche zwischen Kontaktband und Sammelleiter und eine einfache Verbindung des Kontaktbandes mit der elektrischen Zuleitung. Die Ausdrücke Länge und Breite des Kontaktbandes bezeichnen jeweils die Abmessung in der gleichen Ausbreitungsrichtung, durch die die Länge beziehungsweise Breite des Sammelleiters gegeben ist.

In einer bevorzugten Ausgestaltung steht das Kontaktband vollflächig mit der Sammelschiene in direktem Kontakt. Dazu wird ein Kontaktband auf den Sammelleiter aufgelegt. Der besondere Vorteil liegt in einer einfachen Herstellung der Scheibe und der Ausnutzung der gesamten Fläche des Kontaktbandes als Kontaktfläche.

Das Kontaktband kann einfach auf den Sammelleiter aufgelegt sein und wird innerhalb der laminierten Scheibe dauerhaft stabil an der vorgesehenen Position fixiert.

Die Erfindung umfasst weiter ein Verfahren zur Herstellung einer Scheibe mit elektrischem Heizbereich, mindestens umfassend:
(a) Bereitstellen einer im Wesentlichen trapezförmigen ersten Scheibe mit einer Oberfläche III, einer ersten Grundseite mit Länge l₁, einer zweiten Grundseite mit Länge l₂ und einem Verhältnis v der Längen der Grundseiten von
   v = l₁ : l₂ von 0,70 : 1 bis 0,98 : 1,
(b) Aufbringen einer elektrisch leitfähigen Beschichtung auf mindestens einen Teil der Oberfläche III einer ersten Scheibe,
(c) elektrische Unterteilen mindestens eines im Wesentlichen trapezförmigen elektrischen Heizbereichs durch mindestens eine Trennlinie von der elektrisch leitfähigen Beschichtung und Anordnen einer erste Grundseite des Heizbereichs unmittelbar benachbart zur ersten Grundseite der ersten Scheibe und einer zweite Grundseite des Heizbereichs unmittelbar benachbart zu der zweiten Grundseite der ersten Scheibe, wobei das Verhältnis der Länge b₁ der ersten Grundseite des Heizbereichs zur Länge b₂ der zweiten Grundseite des Heizbereichs, bei gegebenem Verhältnis v, zu
   b₁ : b₂ von v : 0,99 bis v : 0,50
   eingestellt wird,
(d) Aufbringen von mindestens zwei zum Anschluss an eine Spannungsquelle vorgesehenen Sammelleiter, die mit der elektrisch leitfähigen Beschichtung im elektrischen Heizbereich so verbunden werden, dass zwischen den Sammelleitern ein Strompfad für einen Heizstrom geformt wird.

Das Aufbringen der elektrisch leitfähigen Beschichtung in Verfahrensschritt (b) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die elektrisch leitfähige Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) oder (b) einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und / oder der Verringerung des Flächenwiderstands der elektrisch leitfähigen Beschichtung dienen.

Die erste Scheibe kann nach Verfahrensschritt (b) gebogen werden, typischerweise bei einer Temperatur von 500 °C bis 700 °C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (b) gebogen werden, beispielsweise wenn die elektrisch leitfähige Beschichtung nicht dazu geeignet ist, einen Biegeprozess ohne Beschädigungen zu überstehen.

Das Aufbringen des Sammelleiters in Verfahrensschritt (d) erfolgt bevorzugt durch Aufdrucken und Einbrennen einer elektrisch leitfähigen Paste in einem Siebdruckverfahren oder in einem Inkjet-Verfahren. Alternativ kann der Sammelleiter als Streifen einer elektrisch leitfähigen Folie auf die elektrisch leitfähige Beschichtung aufgebracht, bevorzugt aufgelegt, angelötet oder angeklebt werden.

Bei Siebdruckverfahren erfolgt die laterale Formgebung durch die Maskierung des Gewebes, durch das die Druckpaste mit den Metallpartikeln gedrückt wird. Durch eine geeignete Formgebung der Maskierung kann beispielsweise die Breite des Sammelleiters besonders einfach vorgeben und variiert werden.

Die Entschichtung einzelner Trennlinien in der elektrisch leitfähigen Beschichtung in Verfahrensschritt (c) erfolgt vorzugsweise durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 µm bis 1000 µm, besonders bevorzugt 30 µm bis 200 µm und insbesondere 70 µm bis 140 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen. Die Entschichtung einer Linie mit einer Breite, die breiter ist als die Breite eines Laserschnitts, erfolgt durch mehrmaliges Abfahren der Linie mit dem Laserstrahl. Die Prozessdauer und die Prozesskosten steigen deshalb mit zunehmender Linienbreite an. Alternativ kann die Entschichtung durch mechanisches Abtragen sowie durch chemisches oder physikalisches Ätzen erfolgen.

Eine vorteilhafte Weiterbildung des erfindungsgemäßen Verfahrens umfasst mindestens die folgenden weiteren Schritte:
(e) Anordnen einer thermoplastischen Zwischenschicht auf der beschichteten Oberfläche der ersten Scheibe und Anordnen einer zweiten Scheibe auf der thermoplastischen Zwischenschicht und
(f) Verbinden der ersten Scheibe und der zweiten Scheibe über die thermoplastische Zwischenschicht.

In Verfahrensschritt (e) wird die erste Scheibe bevorzugt so angeordnet, dass diejenige ihrer Oberflächen, welche mit der elektrisch leitfähigen Beschichtung versehen ist, der thermoplastischen Zwischenschicht zugewandt ist. Die Oberfläche wird dadurch zur innenseitigen Oberfläche der ersten Scheibe und die elektrisch leitfähige Beschichtung hermetisch eingeschlossen und geschützt.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe in Verfahrensschritt (f) erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die Erfindung umfasst weiter die Verwendung der erfindungsgemäßen Scheibe mit elektrischer Kontaktierung in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
Figur 1A eine Draufsicht auf eine Ausgestaltung einer erfindungsgemäßen Scheibe mit elektrischer Heizschicht,
Figur 1B eine Querschnittsdarstellung entlang der Schnittlinie A-A' durch die Scheibe nach Figur 1A,
Figur 2A eine Draufsicht auf eine Scheibe nach dem Stand der Technik als Vergleichsbeispiel,
Figur 2B Simulation der Temperaturverteilung des Vergleichsbeispiels nach Figur 2A,
Figur 3A eine Draufsicht auf eine weitere Ausgestaltung einer erfindungsgemäßen Scheibe,
Figur 3B Simulation der Temperaturverteilung der erfindungsgemäßen Scheibe nach Figur 3A,
Figur 4 eine Draufsicht auf eine weitere Ausgestaltung einer erfindungsgemäßen Scheibe,
Figur 5 eine Draufsicht auf eine weitere Ausgestaltung einer erfindungsgemäßen Scheibe und
Figur 6 ein detailliertes Flussdiagramm einer Ausführungsform des erfindungsgemäßen Verfahrens.

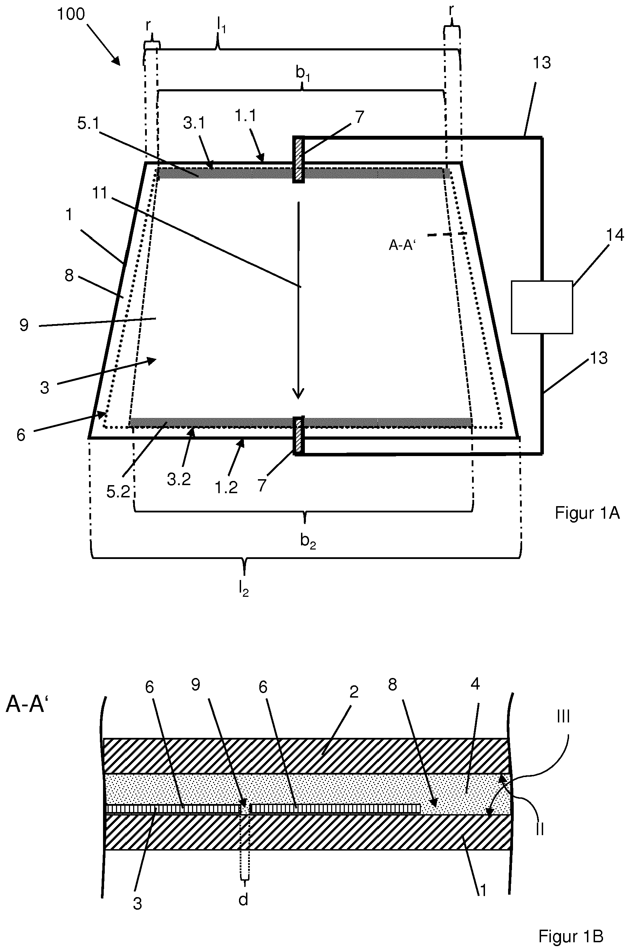

Figur 1A zeigt eine Draufsicht auf eine beispielhafte Ausgestaltung einer erfindungsgemäßen Scheibe 100 mit elektrischem Heizbereich 3. Figur 1B zeigt einen Querschnitt durch die erfindungsgemäße Scheibe 100 aus Figur 1A entlang der Schnittlinie A-A'. Die Scheibe 100 umfasst eine erste Scheibe 1 und eine zweite Scheibe 2, die über eine thermoplastische Zwischenschicht 4 miteinander verbunden sind. Die Scheibe 100 ist beispielsweise eine Fahrzeugscheibe und insbesondere die Windschutzscheibe eines Personenkraftwagens. Die erste Scheibe 1 ist beispielsweise dafür vorgesehen, in Einbaulage dem Innenraum zugewandt zu sein. Die erste Scheibe 1 und die zweite Scheibe 2 bestehen aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche III der ersten Scheibe 1 ist eine elektrisch leitfähige Beschichtung 6 aufgebracht. Die elektrische leitfähige Beschichtung 6 ist ein Schichtensystem, welches beispielsweise drei elektrisch leitfähige Silberschichten enthält, die durch dielektrische Schichten voneinander getrennt sind. Fließt ein Strom durch die elektrisch leitfähige Beschichtung 6 im elektrischen Heizbereich 3, so wird sie infolge ihres elektrischen Widerstands und joulscher Wärmeentwicklung erwärmt. Die elektrisch leitfähige Beschichtung 6 kann daher für eine aktive Beheizung der Scheibe 100 verwendet werden.

Die elektrisch leitfähige Beschichtung 6 erstreckt sich beispielsweise über die gesamte Oberfläche III der ersten Scheibe 1 abzüglich eines umlaufenden rahmenförmigen unbeschichteten Bereichs, der sogenannten Randentschichtung 8, mit einer Breite r von 10 mm. Die Randentschichtung 8 dient der elektrischen Isolierung zwischen der spannungsführenden elektrisch leitfähigen Beschichtung 6 und der Fahrzeugkarosserie. Der Bereich der Randentschichtung 8 ist durch Verkleben mit der Zwischenschicht 4 hermetisch versiegelt, um die elektrisch leitfähige Beschichtung 6 vor Beschädigungen und Korrosion zu schützen.

Zur elektrischen Kontaktierung ist jeweils ein erster Sammelleiter 5.1 im oberen Randbereich der Scheibe 100 und ein weiterer, zweiter Sammelleiter 5.2 im unteren Randbereich auf der elektrisch leitfähigen Beschichtung 6 im elektrischen Heizbereich 3 angeordnet. Die Sammelleiter 5.1, 5.2 enthalten beispielsweise Silberpartikel und wurden im Siebdruckverfahren aufgebracht und anschließend eingebrannt. Die Sammelleiter 5.1, 5.2 haben im dargestellten Beispiel eine konstante Dicke von beispielsweise etwa 10 µm und einen konstanten spezifische Widerstand von beispielsweise 2.3 µOhm•cm.

Der elektrische Heizbereich 3 ist durch eine Trennlinie 9 mit trapezförmigem Umriss von der elektrisch leitfähigen Beschichtung 6 elektrisch unterteilt. Das bedeutet, dass die Trennlinie 9 die elektrisch leitfähige Beschichtung 6 im elektrischen Heizbereich 3 galvanisch von der elektrisch leitfähigen Beschichtung 6 isoliert. Der an der ersten Grundseite 3.1 des elektrischen Heizbereichs 3 angeordnete Sammelleiter 5.1 hat beispielsweise die Länge b₁ der ersten Grundseite 3.1 des elektrischen Heizbereichs 3 und der an der unteren, zweiten Grundseite 3.2 des elektrischen Heizbereichs 3 angeordnete Sammelleiter 5.2 hat hier beispielsweise die Länge b₂ der zweiten Grundseite 3.2 des elektrischen Heizbereichs 3.

Im dargestellten Ausgestaltungsbeispiel beträgt die Länge l₁ der ersten Grundseite 1.1 der ersten Scheibe 1 beispielsweise 900 mm und die Länge l₂ der zweiten Grundseite 1.2 beispielsweise 1000 mm. Das Verhältnis v der Längen l₁:l₂ beträgt also v = 900 mm:1000 mm = 0,90:1 = 0,90.

In diesem Beispiel wurde die Trennlinie 9 derart gewählt, dass die Länge b₁ der ersten Grundseite 3.1 des elektrischen Heizbereichs 3 hier b₁ = 880 mm beträgt. Das heißt, dass die Länge b₁ der ersten Grundseite 3.1 des elektrischen Heizbereichs 3 zuzüglich der Breite einer linken und einer rechten Randentschichtung von insgesamt 2 x 10 mm = 20 mm der Länge l₁ der kürzeren der beiden Grundseiten der ersten Scheibe 1 entspricht, das heißt l₁ = b₁ + 2 x 10 mm.

Die Länge b₂ der zweiten Grundseite 3.2 des elektrischen Heizbereichs 3 beträgt in diesem Beispiel b₂ = 910 mm. Damit beträgt das Verhältnis von b₁:b₂ = 880 mm:910 mm = 0,97.

Die Länge b₂ der zweiten Grundseite 3.2 des elektrischen Heizbereichs 3 wurde demnach so gewählt, dass das Verhältnis der Längen b₁:b₂ mit 0,97 im erfindungsgemäßen Bereich von v : 0,99 (= 0,90:0,99 = 0,91) bis v : 0,50 (= 0,90:0,50 = 1,8) liegt. Das Verhältnis der Längen b₁:b₂ liegt mit 0,97 sogar in einem bevorzugten erfindungsgemäßen Bereich von v : 0,99 (= 0,90:0,99 = 0,91) bis 0,99.

Wird an die Sammelleiter 5.1, 5.2 eine elektrische Spannung aus angelegt, so fließt ein gleichmäßiger Strom entlang eines Strompfads 11 durch die elektrisch leitfähige Beschichtung 6 im elektrischen Heizbereich 3 zwischen den Sammelleitern 5.1, 5.2. Auf jedem Sammelleiter 5.1, 5.2 ist hier beispielsweise ungefähr mittig eine Zuleitung 7 angeordnet. Die Zuleitung 7 ist ein an sich bekannter Folienleiter. Die Zuleitung 7 ist über eine Kontaktfläche mit dem Sammelleiter 5.1, 5.2 elektrisch leitend verbunden, beispielsweise mittels einer Lotmasse, eines elektrisch leitfähigen Klebstoffs oder durch einfaches Aufliegen und Andruck innerhalb der Scheibe 100. Der Folienleiter enthält beispielsweise eine verzinnte Kupferfolie mit einer Breite von 10 mm und einer Dicke von 0,3 mm. Über die elektrischen Zuleitungen 7 sind die Sammelleiter 5.1, 5.2 über Verbindungskabel 13 mit einer Spannungsquelle 14 verbunden, welche eine für Kraftfahrzeuge übliche Bordspannung, bevorzugt von 12 V bis 15 V und beispielsweise etwa 14 V bereitstellt. Alternativ kann die Spannungsquelle 14 auch höhere Spannungen aufweisen, beispielsweise von 35 V bis 45 V und insbesondere 42 V.

Durch die Wahl des erfindungsgemäßen Verhältnisses von b₁:b₂ zu 0,97 konnte eine deutliche Verbesserung der Homogenität der Heizleistungsverteilung im elektrischen Heizbereich 3 erzielt werden, verglichen mit einer Scheibe nach dem Stand der Technik, bei der die gesamte elektrisch leitfähige Beschichtung 6 beheizt wird.

Figur 1B zeigt schematisch einen Querschnitt durch die erfindungsgemäße Scheibe 100 entlang der Schnittlinie A-A'. Die Trennlinie 9 hat eine Breite d von beispielsweise 100 µm und ist beispielsweise durch Laserstrukturierung in die elektrisch leitfähige Beschichtung 6 eingebracht. Trennlinien 9 mit einer derart geringen Breite sind optisch kaum wahrnehmbar und stören die Durchsicht durch die Scheibe 100 nur wenig, was besonders für eine Verwendung in Fahrzeugen von besonderer Wichtigkeit für die Fahrsicherheit ist.

Durch eine an sich bekannte opake Farbschicht als Abdeckdruck kann verhindert werden, dass der Bereich der Sammelleiter 5.1, 5.2 für einen Betrachter sichtbar ist. Der hier nicht dargestellte Abdeckdruck kann beispielsweise auf der innenseitigen Oberfläche II der zweiten Scheibe 2 rahmenförmig aufgebracht sein.

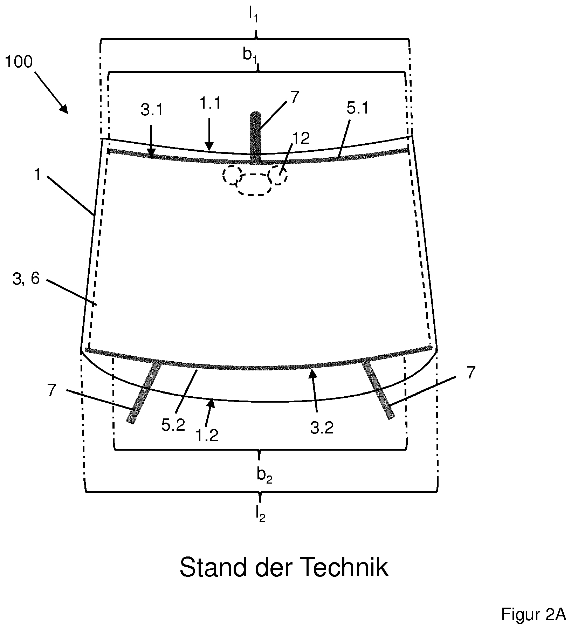

Figur 2A zeigt eine Scheibe 100 nach dem Stand der Technik. Die Scheibe 100 umfasst eine erste Scheibe 1 und eine zweite Scheibe 2, die über eine thermoplastische Zwischenschicht 4 miteinander verbunden sind. Die Scheibe 100 ist beispielsweise eine Fahrzeugscheibe und insbesondere die Windschutzscheibe eines Personenkraftwagens. Die erste Scheibe 1 ist beispielsweise dafür vorgesehen, in Einbaulage dem Innenraum zugewandt zu sein. Die erste Scheibe 1 und die zweite Scheibe 2 bestehen aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche III der ersten Scheibe 1 ist eine elektrisch leitfähige Beschichtung 6 aufgebracht, die im Aufbau der elektrisch leitfähigen Beschichtung 6 aus Figur 1A entspricht. Im Unterschied zur Figur 1A weist der in Figur 2A an der Unterkante der Scheibe 100 angeordnete zweite Sammelleiter 5.2 zwei Zuleitungen 7 auf anstelle nur einer Zuleitung.

Des Weiteren unterscheidet sich die Scheibe 100 nach dem Stand der Technik aus Figur 2A von der erfindungsgemäßen Scheibe 100 aus Figur 1A dadurch, dass keine Trennlinien 9 in die elektrisch leitfähige Beschichtung 6 eingebracht sind und daher der elektrische Heizbereich 3 der gesamten Fläche der elektrisch leitfähigen Beschichtung 6 entspricht.

Im dargestellten Vergleichsbeispiel nach dem Stand der Technik beträgt die Länge l₁ der ersten Grundseite 1.1 der ersten Scheibe 1 beispielsweise 1220 mm und die Länge l₂ der zweiten Grundseite 1.2 beispielsweise 1440 mm. Das Verhältnis v der Längen l₁:l₂ beträgt also v = 1220 mm:1440 mm = 0,85:1 = 0,85.

Im Vergleichsbeispiel nach dem Stand der Technik entspricht der elektrische Heizbereich 3 der gesamten Fläche der elektrisch leitfähigen Beschichtung 6, da keine Unterteilung durch eine Trennlinie vorliegt. Die Länge b₁ der ersten Grundseite 3.1 des elektrischen Heizbereichs 3 beträgt folglich b₁ = 1200 mm und die Länge b₂ der zweiten Grundseite 3.2 des elektrischen Heizbereichs 3 beträgt b₂ = 1420 mm, bei einer Breite einer Randentschichtung 8 von r = 10 mm. Damit beträgt das Verhältnis von b₁:b₂ = 1200 mm:1420 mm = 0,85. Damit liegt das Verhältnis der Längen b₁:b₂ mit 0,85 außerhalb des erfindungsgemäßen Bereichs von v : 0,99 (= 0,85:0,99 = 0,86) bis v : 0,50 (= 0,85:0,50 = 1,69).

Im dargestellten Vergleichsbeispiel weist die elektrische Heizschicht 3 im oberen Drittel der Scheibe und etwa mittig zur Scheibenbreite drei beschichtungsfreie Bereiche 12 auf, die als Kommunikationsfenster dienen können.

Die Scheibe weist an der oberen Kante einen ersten Sammelleiter 5.1 auf. Der Strom wird durch eine Zuleitung 7, in diesen ersten Sammelleiter 5.1 eingespeist. Der Strom fließt durch den elektrischen Heizbereich 3 in einen zweiten Sammelleiter 5.2, der im unteren Bereich der Scheibe 100 angeordnet ist. Der zweite Sammelleiter 5.2 ist an seinem rechten und seinem linken Ende mit jeweils einer Zuleitung 7 verbunden. Die Sammelleiter 5.1, 5.2 haben beispielsweise eine Breite von 16 mm und eine Dicke von 10 µm. Die elektrisch leitfähige Beschichtung 6 hat beispielsweise einen Flächenwiderstand von 0.9 Ohm/Quadrat. Für eine Finite-Elemente-Simulation wurde eine Spannung von 14 V zwischen den unteren Zuleitungen 7 und der oberen Zuleitung 7 und eine Umgebungstemperatur von 22°C angenommen. Des Weiteren wurde in der Simulation eine Heizzeit von 12 min. angenommen.

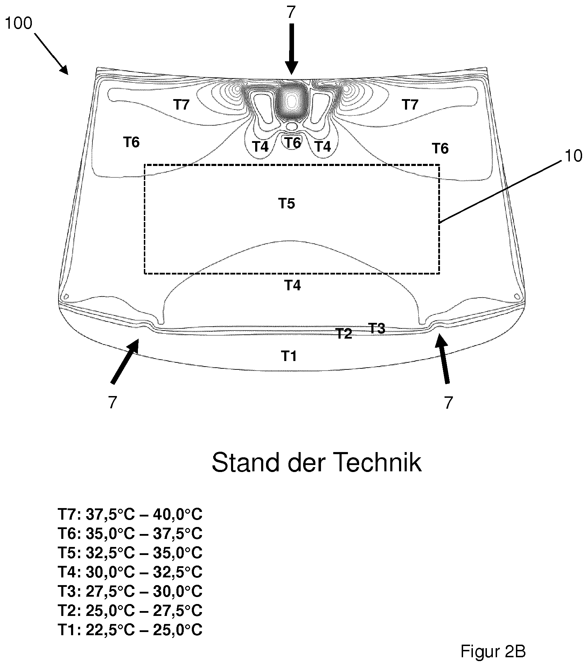

Figur 2B zeigt die Simulation der Temperaturverteilung des Vergleichsbeispiels nach dem Stand der Technik gemäß Figur 2A. Die Positionen der Zuleitungen 7 sind durch Pfeile gekennzeichnet. Die Temperaturverteilung ist ungleichmäßig, insbesondere im kritischen zentralen Sichtfeld 10. Am unteren Rand des zentralen Sichtfelds 10 hat die Scheibe 100 nach dem Vergleichsbeispiel nur eine geringe Temperatur von T4 = 30,0°C bis 32,5°C. In den oberen linken und rechten Ecken liegt die Temperatur dagegen im Bereich von T6 = 35,0°C bis 37,5°C. Für eine schnelle und gleichmäßigere Abtau- und Antibeschlagfunktion ist eine gleichmäßigere Temperaturverteilung notwendig.

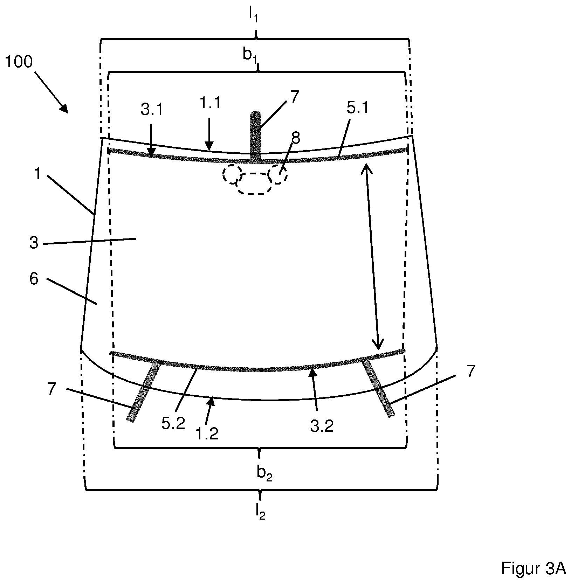

Figur 3A zeigt eine Draufsicht auf eine weitere Ausgestaltung einer erfindungsgemäßen Scheibe 100. Die erste Scheibe 1, die zweite Scheibe 2, die elektrisch leitfähige Beschichtung 6, die thermoplastische Zwischenschicht 4 und die äußeren Zuleitungen 7 sind wie in Figur 2A ausgestaltet. Der wesentliche Unterschied zum Vergleichsbeispiel aus Figur 2A nach dem Stand der Technik ist, dass durch eine Trennlinie 9 ein elektrischer Heizbereich 3 von der elektrisch leitfähigen Beschichtung 6 abgetrennt ist. Diese Trennlinie 9 begrenzt den Stromfluss vom ersten Sammelleiter 5.1 zum gegenüberliegenden zweiten Sammelleiter 5.2. Wie die folgende Simulation zeigt, kann dadurch eine Homogenisierung der Heizleistungsverteilung und der Temperaturverteilung im kritischen zentralen Sichtfeld 10 der erfindungsgemäßen Scheibe 100 erzielt werden. Die Trennlinien 9 wurden durch Laserstrukturierung in die elektrische Heizschicht 3 eingebracht. Die Breite der einzelnen Trennlinien 9 beträgt beispielsweise 100 µm, wodurch die Durchsicht durch die Scheibe 100 und deren optisches Erscheinungsbild nur minimal beeinträchtigt wird.

Im dargestellten Ausgestaltungsbeispiel beträgt die Länge l₁ der ersten Grundseite 1.1 der ersten Scheibe 1 beispielsweise 1220 mm und die Länge l₂ der zweiten Grundseite 1.2 beispielsweise 1440 mm, entsprechend dem Vergleichsbeispiel nach Figur 2A. Das Verhältnis v der Längen l₁:l₂ beträgt also v = 1220 mm:1440 mm = 0,85:1 = 0,85.

In diesem Beispiel wurde die Trennlinie 9 derart gewählt, dass die Länge b₁ der ersten Grundseite 3.1 des elektrischen Heizbereichs 3 hier b₁ = 1200 mm beträgt. Das heißt, dass die Länge b₁ der ersten Grundseite 3.1 des elektrischen Heizbereichs 3 zuzüglich der Breite einer linken und einer rechten Randentschichtung von insgesamt 2 x 10 mm = 20 mm der Länge l₁ der kürzeren der beiden Grundseiten 3.1,3.2 der ersten Scheibe 1 entspricht, das heißt l₁ = b₁ + 2 x 10 mm.

Die Länge b₂ der zweiten Grundseite 3.2 des elektrischen Heizbereichs 3 beträgt in diesem Beispiel ebenfalls b₂ = 1200 mm. Damit beträgt das Verhältnis von b₁:b₂ = 1200 mm:1200 mm = 1,00.

Die Länge b₂ der zweiten Grundseite 3.2 des elektrischen Heizbereichs 3 wurde demnach so gewählt, dass das Verhältnis der Längen b₁:b₂ mit 1,00 im erfindungsgemäßen Bereich von v : 0,99 (= 0,85:0,99 = 0,86) bis v : 0,50 (= 0,85:0,50 = 1,69) liegt.

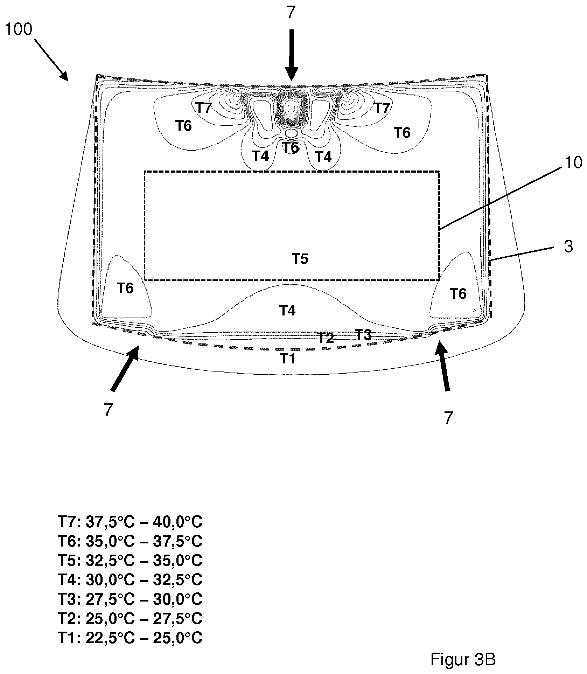

Figur 3B zeigt die Simulation der Temperaturverteilung der erfindungsgemäßen Scheibe 100 nach Figur 3A. Nach 12 min. weist das gesamte zentrale Sichtfeld 10 eine gleichmäßige Temperaturverteilung bei einer Temperatur von T5 = 32,5°C bis 35,0°C auf. Im Falle einer witterungsbedingten Vereisung oder Beschlags wäre das komplette zentrale Sichtfeld 10 innerhalb kurzer Zeit vollständig von Vereisung oder Beschlag befreit und eine ungehinderte Durchsicht hergestellt.

In Tabelle 1 sind die Simulationsergebnisse zusammengefasst.

**Tabelle 1**

| | Gemittelte spezifische Heizleistung im elektrischen Heizbereich 3 | Minimale Temperatur im zentralen Sichtfeld 10 | Temperaturverteilung im zentralen Sichtfeld 10 |
|---|---|---|---|
| Vergleichsbeispiel nach Figur 2A (Stand der Technik) | 351,5 W/m² | 30,0°C - 32,5°C | ungleichmäßig und zu gering |
| Erfindungsgemäße Scheibe 100 nach Figur 3A | 350,9 W/m² | 32,5°C - 35,0°C | gleichmäßig und hoch |

Die erfindungsgemäße Scheibe 100 nach Figur 3A zeigt deutlich verbesserte Heizeigenschaften als die Scheibe 100 nach dem Stand der Technik des Vergleichsbeispiels aus Figur 2A. Bei fast gleicher gemittelter spezifischer Heizleistung im elektrischen Heizbereich 3 von 351,5 W/m² des Vergleichsbeispiels zu 350,9 W/m² der erfindungsgemäßen Scheibe 100 nach Figur 3A, weist die erfindungsgemäße Scheibe 100 nach Figur 3A eine gleichmäßigere und höhere Erwärmung des wichtigen zentralen Sichtfeldes 10 auf als das Vergleichsbeispiel.

Insbesondere im kritischen zentralen Sichtbereich 10 weist die Scheibe nach dem Stand der Technik unter den Simulationsbedingungen am unteren Rand einen ausgedehnten Bereich mit einer Temperatur T4 von 30,0°C bis 32,5°C und in den oberen linken und rechten Ecken eine Temperatur von 35,0°C bis 37,5°C auf. Diese Inhomogenität führt zu einer nur unbefriedigenden Abtau- und Antibeschlagfunktion der Scheibe 100 im zentralen Sichtfeld 10. Im zentralen Sichtfeld 10 genügen die Heizeigenschaften nicht um eine schnelle und einwandfreie Sicht durch die Scheibe 100 bei winterlichen Witterungsverhältnissen zu gewährleisten.

Die erfindungsgemäße Scheibe 100 nach Figur 3A weist im kritischen zentralen Sichtbereich 10 verbesserte Heizeigenschaften auf. So ergaben Simulationen nach der gleichen Zeit wie im Vergleichsbeispiel von 12 min., eine gleichmäßige Erwärmung auf eine mittlere Temperatur T5 von 32,5°C bis 35,0°C über den gesamten zentralen Sichtbereich 10 hinweg. Durch die geringe Breite der Trennlinien 9 ist die Sicht durch die erfindungsgemäße Scheibe 100 nur minimal beeinträchtigt und genügt den Anforderungen an eine Fahrzeugverglasung.

Dieses Ergebnis war für den Fachmann unerwartet und überraschend.

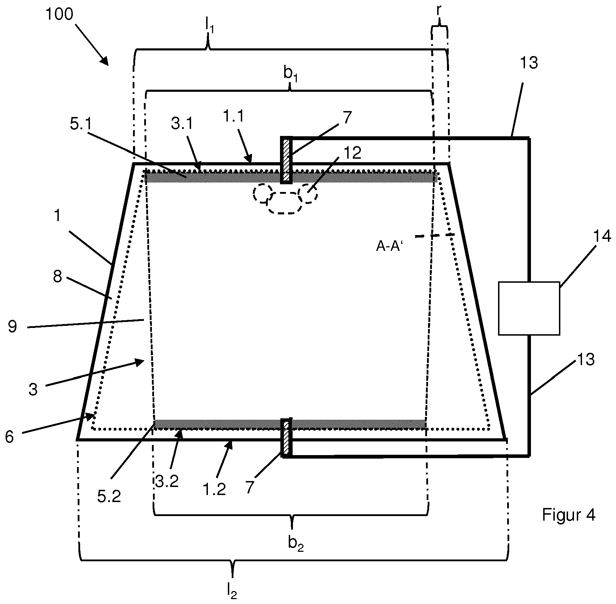

Figur 4 zeigt eine Draufsicht auf eine weitere Ausgestaltung einer erfindungsgemäßen Scheibe 100. Die erste Scheibe 1 mit der elektrisch leitfähigen Beschichtung 6 entspricht in ihrem Aufbau und ihren Abmessungen der Scheibe 100 aus Figur 1A, wobei lediglich der elektrische Heizbereich 3 durch eine andere Führung der Trennlinie 9 anders ausgebildet ist. Des Weiteren weist die elektrisch leitfähige Beschichtung 6 im elektrischen Heizbereich 3 drei beschichtungsfreie Bereiche 12 auf, die im oberen Bereich der ersten Scheibe 1 und in etwa mittig zu den Grundseiten 1.1,1.2 angeordnet sind.

Im dargestellten Ausgestaltungsbeispiel beträgt die Länge l₁ der ersten Grundseite 1.1 der ersten Scheibe 1 beispielsweise 900 mm und die Länge l₂ der zweiten Grundseite 1.2 beispielsweise 1000 mm, wie in Figur 1A bereits ausgeführt. Das Verhältnis v der Längen l₁:l₂ beträgt also v = 900 mm:1000 mm = 0,90:1 = 0,90.

In diesem Beispiel wurde die Trennlinie 9 derart gewählt, dass die Länge b₁ der ersten Grundseite 3.1 des elektrischen Heizbereichs 3 hier b₁ = 880 mm beträgt. Das heißt, dass die Länge b₁ der ersten Grundseite 3.1 des elektrischen Heizbereichs 3 zuzüglich der Breite einer linken und einer rechten Randentschichtung 8 von insgesamt 2 x 10 mm = 20 mm der Länge l₁ der kürzeren der beiden Grundseiten der ersten Scheibe 1 entspricht, das heißt l₁ = b₁ + 2 x 10 mm.

Im Unterschied zur Figur 1A beträgt die Länge b₂ der zweiten Grundseite 3.2 des elektrischen Heizbereichs 3 in diesem Beispiel b₂ = 800 mm. Damit beträgt das Verhältnis von b₁:b₂ = 880 mm:800 mm = 1,10.

Die Länge b₂ der zweiten Grundseite 3.2 des elektrischen Heizbereichs 3 wurde demnach so gewählt, dass das Verhältnis der Längen b₁:b₂ mit 1,10 im erfindungsgemäßen Bereich von v : 0,99 (= 0,90:0,99 = 0,91) bis v : 0,50 (= 0,90:0,50 = 1,8) liegt.

Das Verhältnis der Längen b₁:b₂ liegt mit 1,10 sogar im bevorzugten erfindungsgemäßen Bereich von 1,01 bis v : 0,50 (= 0,90:0,50 = 1,80).

Es hat sich herausgestellt, dass diese erfindungsgemäße Lösung zu besonders homogene Heizleistungsverteilungen in elektrischen Heizbereichen 3 führt, wenn diese beschichtungsfreie Bereiche 12 aufweisen.

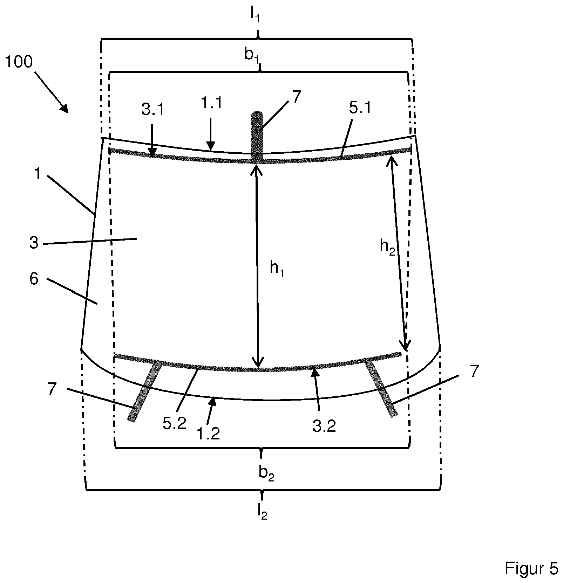

Figur 5 zeigt eine Draufsicht auf eine weitere Ausgestaltung einer erfindungsgemäßen Scheibe 100. Die erste Scheibe 1 mit der elektrisch leitfähige Beschichtung 6 entspricht in ihrem Aufbau und ihren Abmessungen der Scheibe aus Figur 3A, wobei lediglich der elektrische Heizbereich 3 durch eine andere Führung der Trennlinie 9 anders ausgebildet ist.

Im dargestellten Ausgestaltungsbeispiel ist der Abstand h₁ der Sammelleiter 5.1, 5.2 in der Mitte des elektrischen Heizbereichs 3 größer ist als der Abstand h₂ der Sammelleiter 5.1, 5.2 an den äußeren Rändern des elektrische Heizbereichs 3. Der Abstand h₁ beträgt beispielsweise 900 mm und der Abstand h₂ beträgt 800 mm.

Im dargestellten Ausgestaltungsbeispiel beträgt die Länge l₁ der ersten Grundseite 1.1 der ersten Scheibe 1 beispielsweise 1220 mm und die Länge l₂ der zweiten Grundseite 1.2 beispielsweise 1440 mm, wie im Vergleichsbeispiel nach Figur 3A. Das Verhältnis v der Längen l₁:l₂ beträgt also v = 1220 mm:1440 mm = 0,85:1 = 0,85.

In diesem Beispiel wurde die Trennlinie 9 derart gewählt, dass die Länge b₁ der ersten Grundseite 3.1 des elektrischen Heizbereichs 3 hier b₁ = 1200 mm beträgt. Das heißt, dass die Länge b₁ der ersten Grundseite 3.1 des elektrischen Heizbereichs 3 zuzüglich der Breite einer linken und einer rechten Randentschichtung von insgesamt 2 x 10 mm = 20 mm der Länge l₁ der kürzeren der beiden Grundseiten der ersten Scheibe 1 entspricht, das heißt l₁ = b₁ + 2 x 10 mm.

Die Länge b₂ der zweiten Grundseite 3.2 des elektrischen Heizbereichs 3 beträgt in diesem Beispiel b₂ = 1000 mm. Damit beträgt das Verhältnis von b₁:b₂ = 1200 mm:1000 mm = 1,20.

Die Länge b₂ der zweiten Grundseite 3.2 des elektrischen Heizbereichs 3 wurde demnach so gewählt, dass das Verhältnis der Längen b₁:b₂ mit 1,20 im erfindungsgemäßen Bereich von v : 0,99 (= 0,85:0,99 = 0,86) bis v : 0,50 (= 0,85:0,50 = 1,69) liegt. Damit liegt das Verhältnis der Längen b₁:b₂ mit 1,2 sogar innerhalb eines bevorzugten erfindungsgemäßen Bereichs von 1,01 bis v : 0,50 (= 0,85:0,50 = 1,69).

Ein derartiges Verhältnis der Längen b₁:b₂ innerhalb des bevorzugten erfindungsgemäßen Bereichs von 1,01 bis v : 0,50 ist besonders vorteilhaft um bei elektrischen Heizbereichen 3, deren Abstand h₁ der Sammelleiter 5.1, 5.2 in der Mitte des elektrischen Heizbereichs 3 größer ist als der Abstand h₂ der Sammelleiter 5.1, 5.2 an den äußeren Rändern des elektrische Heizbereichs 3. Es ergibt sich eine deutlich homogenere Heizleistungsverteilung und eine gleichmäßigere Temperaturverteilung bei Anliegen einer Spannung als bei Scheiben nach dem Stand der Technik, bei denen b₁:b₂ außerhalb des erfindungsgemäßen Bereichs liegt.

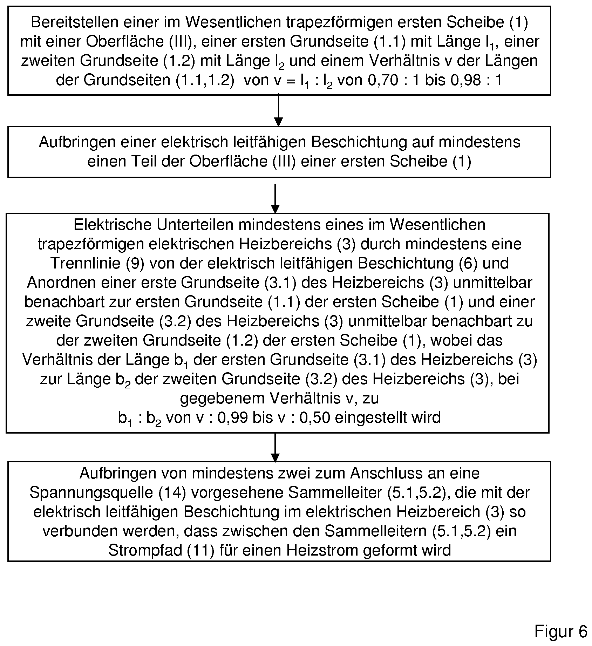

Figur 6 zeigt ein Flussdiagramm eines Ausführungsbeispiels des erfindungsgemäßen Verfahrens zur Herstellung einer elektrisch beheizbaren Scheibe 100.

Es konnte gezeigt werden, dass erfindungsgemäße Scheiben 100 mit Trennlinien 9 deutlich verbesserte Heizeigenschaften, eine verbesserte Homogenität der Heizleistungsverteilung und eine gleichmäßigere Temperaturverteilung bei höheren Temperaturen in besonders wichtigen Scheibenbereichen zeigen. Gleichzeitig wird die Durchsicht durch die Scheibe 100 durch die erfindungsgemäßen Trennlinien 9 nur minimal beeinträchtigt.

Dieses Ergebnis war für den Fachmann unerwartet und überraschend.

### Bezugszeichenliste:

- 1: erste Scheibe
- 1.1: erste Grundseite der ersten Scheibe 1
- 1.2: zweite Grundseite der ersten Scheibe 1
- 2: zweite Scheibe
- 3: elektrischer Heizbereich
- 3.1: erste Grundseite des elektrischen Heizbereichs 3
- 3.2: zweite Grundseite des elektrischen Heizbereichs 3
- 4: thermoplastische Zwischenschicht
- 5.1,5.2: Sammelleiter
- 6: elektrisch leitfähige Beschichtung
- 7: Zuleitung
- 8: Randentschichtung
- 9: Trennlinie
- 10: Bereich
- 11: Strompfad
- 12: beschichtungsfreier Bereich
- 13: Verbindungskabel
- 14: Spannungsquelle
- 100: Scheibe
- II: Oberfläche der zweiten Scheibe 2
- III: Oberfläche der ersten Scheibe 1

- b₁, b₂: Länge der Grundseite des elektrischen Heizbereichs 3
- d: Breite der Trennlinie 9
- l₁, l₂: Länge der Grundseite der ersten Scheibe 1
- h₁, h₂: Höhe des elektrischen Heizbereichs 3
- r: Breite der Randentschichtung 8
- A-A': Schnittlinie

## Patentansprüche

1. Scheibe (100) mit elektrischem Heizbereich (3), mindestens umfassend:
- eine im Wesentlichen trapezförmige erste Scheibe (1) mit einer Oberfläche (III), einer ersten Grundseite (1.1) mit Länge l₁ und einer zweiten Grundseite (1.2) mit Länge l₂, wobei das Verhältnis v der Längen der Grundseiten (1.1,1.2)
v = l₁ : l₂ von 0,70 : 1 bis 0,98 : 1
beträgt,
- mindestens eine elektrisch leitfähige Beschichtung (6), die zumindest auf einem Teil der Oberfläche (III) aufgebracht ist,
- mindestens einen im Wesentlichen trapezförmigen elektrischen Heizbereich (3), der durch mindestens eine Trennlinie (9) von der elektrisch leitfähigen Beschichtung (6) elektrisch unterteilt ist und eine erste Grundseite (3.1) des Heizbereichs (3) unmittelbar benachbart zur ersten Grundseite (1.1) der ersten Scheibe (1) und eine zweite Grundseite (3.2) des Heizbereichs (3) unmittelbar benachbart zu der zweiten Grundseite (1.2) der ersten Scheibe (1) angeordnet ist und
- mindestens zwei zum Anschluss an eine Spannungsquelle (14) vorgesehene Sammelleiter (5.1,5.2), die mit der elektrisch leitfähigen Beschichtung (6) im elektrischen Heizbereich (3) so verbunden sind, dass zwischen den Sammelleitern (5.1,5.2) ein Strompfad (11) für einen Heizstrom geformt ist, **dadurch gekennzeichnet, dass** das Verhältnis der Länge b₁ der ersten Grundseite (3.1) des Heizbereichs (3) zur Länge b₂ der zweiten Grundseite (3.2) des Heizbereichs (3)
b₁ : b₂ von v : 0,99 bis v : 0,50
beträgt.

2. Scheibe (100) nach Anspruch 1, wobei
b₁ : b₂ von v : 0,99 bis 0,99
oder
b₁ : b₂ von 1,01 bis v : 0,50
beträgt.

3. Scheibe (100) nach Anspruch 1, wobei die erste Scheibe (1) und/oder der elektrische Heizbereich (3) die Form eines symmetrischen Trapezes aufweist.

4. Scheibe (100) nach Anspruch 1 oder Anspruch 2, wobei die erste Grundseite (3.1) des Heizbereichs (3) im Wesentlichen parallel zur ersten Grundseite (1.1) der ersten Scheibe (1) angeordnet ist.

5. Scheibe (100) nach einem der Ansprüche 1 bis 3, wobei die Länge der kürzeren der beiden Grundseiten (1.1,1.2) der ersten Scheibe (1) der Länge der unmittelbar benachbarten Grundseite (3.1,3.2) des Heizbereichs (3) zuzüglich der Breiten r einer Randentschichtung (8) entspricht.

6. Scheibe (100) nach einem der Ansprüche 1 bis 4, wobei die Breite d der Trennlinie (9) von 30 µm bis 200 µm und bevorzugt von 70 µm bis 140 µm beträgt.

7. Scheibe (100) nach einem der Ansprüche 1 bis 5, wobei die Sammelleiter (5) als gebrannte Druckpaste ausgebildet sind, die bevorzugt metallische Partikel, Metallpartikel und/oder Kohlenstoffpartikel und insbesondere Silberpartikel enthält und bevorzugt einen spezifischen Widerstand ρₐ von 0.8 µOhm•cm bis 7.0 µOhm•cm und besonders bevorzugt von 1.0 µOhm•cm bis 2.5 µOhm•cm aufweist.

8. Scheibe (100) nach einem der Ansprüche 1 bis 6, wobei die Oberfläche (III) der ersten Scheibe (1) über eine thermoplastische Zwischenschicht (4) mit einer zweiten Scheibe (2) flächig verbunden ist.

9. Scheibe (100) nach einem der Ansprüche 1 bis 7, wobei die erste Scheibe (1) und/oder die zweite Scheibe (2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

10. Scheibe (100) nach einem der Ansprüche 1 bis 8, wobei die elektrisch leitfähige Beschichtung (6) transparent ist und/oder einen Flächenwiderstand von 0,4 Ohm/Quadrat bis 10 Ohm/Quadrat und bevorzugt von 0,5 Ohm/Quadrat bis 1 Ohm/Quadrat aufweist und/oder Silber (Ag), Indium-Zinnoxid (ITO), fluordotiertes Zinnoxid (SnO₂:F) oder aluminiumdotiertes Zinkoxid (ZnO:Al) enthält.

11. Scheibe (100) nach einem der Ansprüche 3 bis 10, wobei die elektrisch leitfähige Beschichtung (6) innerhalb des elektrischen Heizbereichs (3) mindestens einen beschichtungsfreien Bereich 12, bevorzugt zur Ausbildung eines Kommunikationsfensters, aufweist und der beschichtungsfreie Bereich 12 bevorzugt in der Mitte der Grundseiten 1.1, 1.2 der ersten Scheibe 1 angeordnet ist.

12. Scheibe (100) nach einem der Ansprüche 2 bis 9, wobei der Abstand h₁ der Sammelleiter 5.1, 5.2 in der Mitte des elektrischen Heizbereichs (3) größer ist als der Abstand h₂ der Sammelleiter 5.1, 5.2 an den äußeren Rändern des elektrischen Heizbereichs (3).

13. Verfahren zur Herstellung einer Scheibe (100) mit elektrischem Heizbereich, mindestens umfassend:
(a) Bereitstellen einer im Wesentlichen trapezförmigen ersten Scheibe (1) mit einer Oberfläche (III), einer ersten Grundseite (1.1) mit Länge l₁, einer zweiten Grundseite (1.2) mit Länge l₂ und einem Verhältnis v der Längen der Grundseiten (1.1,1.2) von v = l₁ : l₂ von 0,70 : 1 bis 0,98 : 1,
(b) Aufbringen einer elektrisch leitfähigen Beschichtung auf mindestens einen Teil der Oberfläche (III) einer ersten Scheibe (1),
(c) elektrische Unterteilen mindestens eines im Wesentlichen trapezförmigen elektrischen Heizbereichs (3) durch mindestens eine Trennlinie (9) von der elektrisch leitfähigen Beschichtung (6) und Anordnen einer erste Grundseite (3.1) des Heizbereichs (3) unmittelbar benachbart zur ersten Grundseite (1.1) der ersten Scheibe (1) und einer zweite Grundseite (3.2) des Heizbereichs (3) unmittelbar benachbart zu der zweiten Grundseite (1.2) der ersten Scheibe (1), wobei das Verhältnis der Länge b₁ der ersten Grundseite (3.1) des Heizbereichs (3) zur Länge b₂ der zweiten Grundseite (3.2) des Heizbereichs (3) zu
b₁ : b₂ von v : 0,99 bis v : 0,50
eingestellt wird und
(d) Aufbringen von mindestens zwei zum Anschluss an eine Spannungsquelle (14) vorgesehene Sammelleiter (5.1,5.2), die mit der elektrisch leitfähigen Beschichtung im elektrischen Heizbereich (3) so verbunden werden, dass zwischen den Sammelleitern (5.1,5.2) ein Strompfad (11) für einen Heizstrom geformt wird.

14. Verfahren nach Anspruch 13, wobei die Trennlinien (9) durch Laserstrukturierung eingebracht werden.

15. Verwendung der Scheibe (100) nach einen der Ansprüche 1 bis 12 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als elektrischer Heizkörper.

## Claims

1. Pane (100) with an electrical heating region (3), comprising at least:
- a substantially trapezoidal first pane (1) with a surface (III), a first base (1.1) with length l₁ and a second base (1.2) with length l₂, wherein the ratio v of the lengths of the bases (1.1,1.2)
v = l₁ : l₂ is from 0.70 : 1 to 0.98 : 1
- at least one electrically conductive coating (6), which is applied at least on part of the surface (III),
- at least one substantially trapezoidal electrical heating region (3), which is electrically divided by at least one separating line (9) from the electrically conductive coating (6) and a first base (3.1) of the heating region (3) is arranged immediately adjacent the first base (1.1) of the first pane (1) and a second base (3.2) of the heating region (3) is arranged immediately adjacent the second base (1.2) of the first pane (1), and
- at least two collecting conductors (5.1,5.2) provided for connection to a voltage source (14), which are connected to the electrically conductive coating (6) in the electrical heating region (3) such that a current path (11) for a heating current is formed between the collecting conductors (5.1,5.2),
**characterized in that**
the ratio of the length b₁ of the first base (3.1) of the heating region (3) to the length b₂ of the second base (3.2) of the heating region (3)
b₁ : b₂ is from v : 0.99 to v : 0.50.

2. Pane (100) according to claim 1, wherein
b₁ : b₂ is from v : 0.99 to 0.99
or
b₁ : b₂ is from 1.01 to v : 0.50.

3. Pane (100) according to claim 1, wherein the first pane (1) and/or the electrical heating region (3) has the shape of a symmetrical trapezoid.

4. Pane (100) according to claim 1 or claim 2, wherein the first base (3.1) of the heating region (3) is arranged substantially parallel to the first base (1.1) of the first pane (1).

5. Pane (100) according to one of claims 1 through 3, wherein the length of the shorter of the two bases (1.1,1.2) of the first pane (1) corresponds to the length of the immediately adjacent base (3.1,3.2) of the heating region (3) plus the width r of an edge decoating (8).

6. Pane (100) according to one of claims 1 through 4, wherein the width d of the separating line (9) is from 30 µm to 200 µm and preferably from 70 µm to 140 µm.

7. Pane (100) according to one of claims 1 through 5, wherein the collecting conductors (5) are implemented as fired printing paste, which preferably contains metallic particles, metal particles, and/or carbon particles and in particular silver particles and preferably has a specific resistance ρₐ from 0.8 µohm•cm to 7.0 µohm•cm and particularly preferably from 1.0 µohm•cm to 2.5 µohm•cm.

8. Pane (100) according to one of claims 1 through 6, wherein the surface (III) of the first pane (1) is laminarially bonded to a second pane (2) via a thermoplastic intermediate layer (4).

9. Pane (100) according to one of claims 1 through 7, wherein the first pane (1) and/or the second pane (2) contains glass, preferably flat glass, float glass, quartz glass, borosilicate glass, soda lime glass, or polymers, preferably polyethylene, polypropylene, polycarbonate, polymethylmethacrylate, and/or mixtures thereof.

10. Pane (100) according to one of claims 1 through 8, wherein the electrically conductive coating (6) is transparent and/or has a sheet resistance from 0.4 ohm/square to 10 ohm/square and preferably from 0.5 ohm/square to 1 ohm/square and/or contains silver (Ag), indium tin oxide (ITO), fluorine-doped tin oxide (SnO₂:F), or aluminum-doped zinc oxide (ZnO:Al).

11. Pane (100) according to one of claims 3 through 10, wherein the electrically conductive coating (6) has, inside the electrical heating region (3), at least one coating-free region (12), preferably for forming a communication window, and the coating-free region (12) is preferably arranged in the center of the bases 1.1, 1.2 of the first pane 1.

12. Pane (100) according to one of claims 2 through 9, wherein the distance h₁ between the collecting conductors 5.1, 5.2 in the center of the electrical heating region (3) is greater than the distance h₂ between the collecting conductors 5.1, 5.2 on the outer edges of the electrical heating region (3).

13. Method for producing a pane (100) with an electrical heating region, comprising at least:
(a) preparing a substantially trapezoidal first pane (1) with a surface (III), a first base (1.1) with length l₁, a second base (1.2) with length l₂, and a ratio v of the lengths of the bases (1.1,1.2) of v = l₁ : l₂ from 0.70 : 1 to 0.98 : 1,
(b) applying an electrically conductive coating on at least part of the surface (III) of a first pane (1),
(c) electrically dividing of at least one substantially trapezoidal electrical heating region (3) by at least one separating line (9) from the electrically conductive coating (6) and arranging a first base (3.1) of the heating region (3) immediately adjacent the first base (1.1) of the first pane (1) and a second base (3.2) of the heating region (3) immediately adjacent the second base (1.2) of the first pane (1), wherein the ratio of the length b₁ of the first base (3.1) of the heating region (3) to the length b₂ of the second base (3.2) of the heating region (3) is set to
b₁ : b₂ from v : 0.99 to v : 0.50
and
(d) applying at least two collecting conductors (5.1,5.2) provided for connection to a voltage source (14), which are connected to the electrically conductive coating in the electrical heating region (3) such that a current path (11) for a heating current is formed between the collecting conductors (5.1,5.2).

14. Method according to claim 13, wherein the separating lines (9) are introduced by laser patterning.

15. Use of the pane (100) according to one of claims 1 through 12 in means of transportation for travel on land, in the air, or on water, in particular in motor vehicles, for example, as a windshield, rear window, side panes, and/or roof panel as well as as a functional individual piece, and as a built-in component in furniture, appliances, and buildings, in particular as an electrical heater.

## Revendications

1. Vitre (100) avec zone de chauffage électrique (3), comprenant au moins :
- une première vitre essentiellement trapézoïdale (1) avec une surface (III), une première base (1.1) avec une longueur l₁ et une deuxième base (1.2) avec une longueur l₂, où le rapport v entre les longueurs des bases (1.1, 1.2) est
v = l₁ : l₂ de 0,70 : 1 à 0.98 : 1,
- au moins un revêtement conducteur d'électricité (6) qui est appliqué sur au moins une partie de la surface (III),
- au moins une zone de chauffage électrique essentiellement trapézoïdale (3), qui est électriquement divisé par au moins une ligne de séparation (9) du revêtement conducteur d'électricité (6) et une première base (3.1) de la zone de chauffage (3) est disposée immédiatement adjacente à la première base (1.1) de la première vitre (1) et une deuxième base (3.2) de la zone de chauffage (3) est disposée immédiatement adjacente à la deuxième base (1.2) de la première vitre (1), et
- au moins deux conducteurs collectifs (5.1, 5.2), prévues pour le raccordement à une deuxième source d'alimentation électrique (14), qui est connecté au revêtement conducteur d'électricité (6) de telle manière dans la zone de chauffage électrique (3), qu'entre les conducteurs collectifs (5.1,5.2) un trajet de courant (11) pour un courant de chauffage est formé, **caractérisé en ce que** le rapport de la longueur b₁ de la première base (3.1) de la zone de chauffage (3) par rapport à la longueur b₂ de la deuxième base (3.2) de la zone de chauffage (3)
b₁: b₂ est de v : 0.99 à v: 0,50.

2. Vitre (100) selon la revendication 1, où
b₁: b₂ est de v : 0,99 à 0,99
ou
b₁: b₂ est de 1,01 à v : 0,50.

3. Vitre (100) selon la revendication 1, où la première feuille (1) et/ou la zone de chauffage électrique (3) prend la forme d'un trapèze symétrique.

4. Vitre (100) selon la revendication 1 ou 2, où la première base (3.1) de la zone de chauffage (3) est disposée essentiellement parallèle à la première base (1.1) de la première vitre (1).

5. Vitre (100) selon l'une des revendications 1 à 3, où la longueur de la plus courte des deux bases (1.1, 1 2) de la première vitre (1) correspond à la longueur de la base adjacente (3.1, 3.2) de la zone de chauffage (3), majorée de la largeur r d'un bord sans revêtement (8).

6. Vitre (100) selon l'une des revendications 1 à 4, où la largeur d de la ligne de séparation (9) est de 30 µm à 200 µm et de préférence de 70 µm à 140 µm.

7. Vitre (100) selon l'une des revendications 1 à 5, où les conducteurs collectifs (5) sont formés comme pâte d'impression brûlé, qui contiennent de préférence des particules métalliques, des particules de métal ou des particules de carbone et en particulier des particules d'argent et de préférence une résistance spécifique ρₐ de 0,8 µOhm•cm à 7,0 µOhm•cm et de manière particulièrement privilégiée de 1,0 µOhm•cm à 2,5 cm•µOhm.

8. Vitre (100) selon l'une des revendications 1 à 6, où la surface (III) de la première vitre (1) est reliée par toute sa surface à une deuxième vitre (2) par une couche intermédiaire thermoplastique (4).

9. Vitre (100) selon l'une des revendications 1 à 7, où la première vitre (1) et/ou la deuxième vitre (2) contient du verre, de préférence du verre plat, du verre flotté, du verre de quartz, du verre borosilicate, du verre à chaux sodée ou des polymères, de préférence du polyéthylène, du polypropylène, du polycarbonate, du polyméthacrylate de méthyle et/ou des mélanges de ceux-ci.

10. Vitre (100) selon l'une des revendications 1 à 8, où le revêtement électriquement conducteur (6) est transparent et/ou présente une résistance de surface de 0,4 Ohms / carré à 10 Ohms / carré et de préférence de 0,5 Ohms / carré à 1 Ohm / carré et/ou contient de l'argent (Ag), de l'oxyde d'étain-indium (ITO), de l'oxyde d'étain dopé au fluor (SnO₂:F) ou de l'oxyde de zinc dopé à l'aluminium (ZnO:Al).

11. Vitre (100) selon l'une des revendications 3 à 10, où le revêtement électriquement conducteur (6) à l'intérieur de la zone de chauffage électrique (3) présente au moins une zone sans revêtement 12, de préférence pour la formation d'une fenêtre de communication, et la zone sans revêtement 12 est disposée de préférence dans le centre des bases 1.1, 1.2 de la première vitre 1.

12. Vitre (100) selon l'une des revendications 2 à 9, où la distance h₁ des conducteurs collectifs (5.1, 5.2), dans le centre de la zone de chauffage électrique (3) est supérieure à la distance h₂ des conducteurs collectifs 5.1, 5.2 sur les bords extérieurs de la zone de chauffage électrique (3).

13. Procédé de fabrication pour produire une vitre (100) avec une zone de chauffage électrique, comprenant au moins :
(a) la fourniture d'une première vitre (1) essentiellement trapézoïdale avec une surface (III), une première base (1.1) avec une longueur l₁ et une deuxième base (1.2) avec une longueur l₂, et un rapport v entre les longueurs des bases (1.1, 1.2) de v = l₁ : l₂ de 0,70 : 1 à 0.98 : 1,
(b) l'application d'une couche conductrice sur au moins une partie de la surface (III) d'une première vitre (1),
(c) la division électrique d'au moins une zone de chauffage électrique essentiellement trapézoïdale (3) par au moins une ligne de séparation (9) du revêtement électriquement conducteur (6) de séparation et la disposition d'une première base (3.1) de la zone de chauffage (3) immédiatement adjacente à la première base (1.1) de la première vitre (1) et d'une deuxième base (3.2) de la zone de chauffage (3) immédiatement adjacente à la seconde base (1.2)de la première vitre (1), où le rapport de la longueur b₁, de la première base (3.1) de la zone de chauffage (3) par rapport à la longueur b₂ de la deuxième base (3.2) de la zone de chauffage (3) à
b₁ :b₂ eat réglé à v : 0,99 à v : 0,50,
et
(d) l'application d'au moins deux conducteurs collectifs (5.1, 5.2) prévus pour être reliés à une source d'alimentation électrique, qui sont connectés au revêtement conducteur d'électricité (6) dans la zone de chauffage électrique (3) de telle manière qu'entre les conducteurs collectifs (5.1,5.2) un trajet de courant (11) pour un courant de chauffage est formé,

14. Procédé selon la revendication 13, où les lignes de séparation (9) sont introduites par structuration laser.

15. Utilisation de la vitre (100) selon l'une des revendications 1 à 12 dans les moyens de locomotion pour la circulation sur la terre, dans l'air ou sur l'eau, en particulier dans les véhicules automobiles, tels que les pare-brises, lunettes arrières, fenêtres latérales et/ou vitre de toit, ainsi que comme pièce fonctionnelle et accessoire dans le cadre de l'installation dans le mobilier, les équipements et les bâtiments, e particulier les radiateurs électriques.
